# EUROPEAN PATENT APPLICATION

(11) **EP 4 692 803 A1**
(43) Date of publication of application: **11.02.2026**
(21) Application number: 23930914.9
(22) Date of filing: 13.12.2023
(51) Int. Cl.: G01N 35/00, G01N 35/02

(54) **AUTOMATIC ANALYSIS DEVICE**

(30) Priority: 28.03.2023 JP 2023051343
(71) Applicant: HITACHI HIGH-TECH CORPORATION, Tokyo 105-6409 (JP)
(72) Inventor: TAKANO Erii, Tokyo 105-6409 (JP); OSAKI Yutaro, Tokyo 105-6409 (JP); KIKUCHI Satoshi, Tokyo 105-6409 (JP); NAKANO Hiroki, Tokyo 105-6409 (JP)
(74) Representative: Strehl & Partner mbB
(86) International application number: PCT/JP2023/044648
(87) International publication number: WO 2024/202294

(57) **Abstract**

[Problem]

To provide an automatic analyzer capable completing feeding of a container related to analysis of a sample and the like within a shorter time compared to a prior art.

[Solution]

An automatic analyzer includes: a container holding unit 114 that has a plurality of sample container arrangement positions 102 where each of plural sample containers 109 used for analysis of a sample can be arranged; a detection unit that detects, for each of the sample container arrangement positions 102, whether the sample container 109 is arranged at the sample container arrangement position 102; a reader 106 that reads information of the sample container 109; and a control unit 142 that controls the reader 106 so as to read only the sample container arrangement position 102 that is detected by the detection unit that the sample container 109 is arranged.

## Description

### Technical Field

This invention relates to an automatic analyzer.

### Background Art

Patent Literature 1 discloses the configuration provided with operation stop means for stopping an operation of a unit upon detection of abnormality in the operation of the unit, measurement re-start instruction reception means for receiving a re-start instruction of a measurement operation when the measurement operation is stopped by the operation stop means, and measurement re-start means for bringing the unit to an initial position when the measurement re-start instruction reception means receives the instruction of re-starting the measurement operation, and controlling the unit and the detection unit to re-start the measurement operation.

### Citation List

### Patent Literature

Patent Literature 1: Japanese Patent No. 5143630

### Summary of Invention

### Technical Problem

An automatic analyzer for automatically analyzing such sample as blood and urine may be configured to recognize a position of a sample container placed on a sample disk using a barcode when feeding the sample into a device for the sample.

In the above-described state, it takes one second for recognizing each position of the sample container upon recognizing each position on the sample disk, thus prolonging the sample feeding time. It is therefore required to remedy the drawback.

This applies to the case of reading information when feeding many containers, for example, feeding reagents onto the reagent disk.

The present invention provides an automatic analyzer capable of completing feeding of the container related to analysis of the sample and the like within a shorter time compared to a prior art.

### Solution to Problem

The present invention provides a plurality of solutions for the above-described problem. For example, provided are a container holding unit that has a plurality of positions at which a plurality of containers used for analysis of a sample can be respectively placed, a detection unit that detects, for each of the positions, whether the container is placed at the position, a reader that reads information of the container, and a control unit that controls the reader so as to read only the position at which the placement of the container is detected by the detection unit.

### Advantageous Effects of Invention

The present invention allows completion of feeding of the container relating to the analysis of the sample or the like in a shorter time than the time for the prior art. Objects, configurations, and effects other than the above will be apparent from the description of the following embodiments.

### Brief Description of the Drawings

[FIG. 1] FIG. 1 is a drawing illustrating a sketch of an overall configuration of an automatic analyzer of an embodiment.
[FIG. 2] FIG. 2 is a top view illustrating the detail of a sample presence/absence sensor and a sample position sensor in the automatic analyzer of the embodiment.
[FIG. 3] FIG. 3 is a side view illustrating the detail of the sample presence/absence sensor and the sample position sensor in the automatic analyzer of the embodiment.
[FIG. 4] FIG. 4 is a drawing illustrating a relation of a sample presence/absence sensor signal and a sample position sensor signal in the automatic analyzer of the embodiment.
[FIG. 5] FIG. 5 illustrates a process flow for reading sample information in the automatic analyzer of the embodiment.
[FIG. 6] FIG. 6 is a drawing illustrating an example of the configuration required for reading sample information in an automatic analyzer.
[FIG. 7] FIG. 7 is a drawing explaining the difference of the time required for reading sample information of the automatic analyzer of the embodiment and an automatic analyzer of a prior art.

### Description of Embodiments

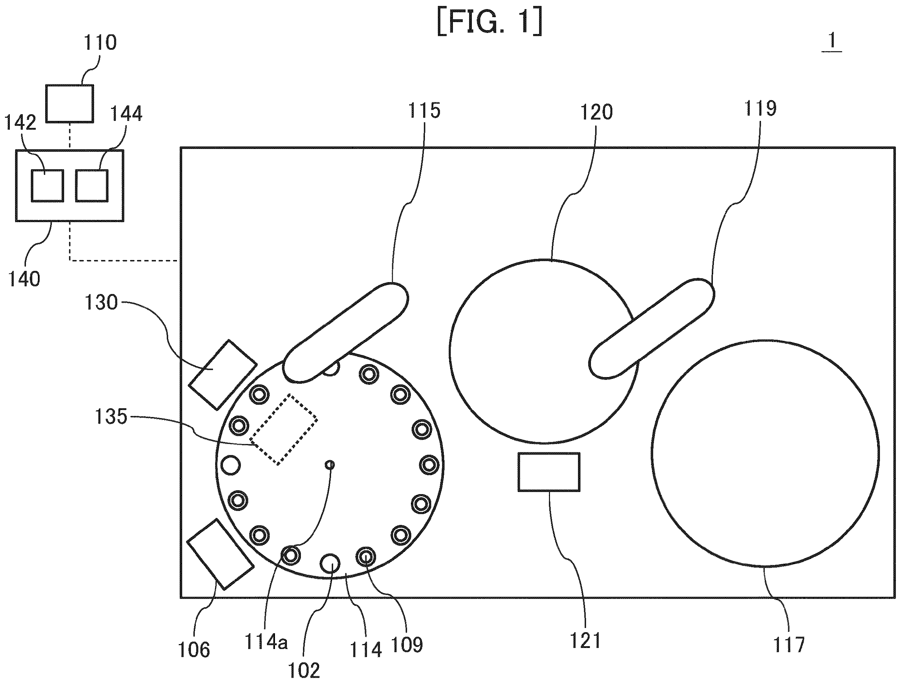

The embodiments of the automatic analyzer in the present invention will be described with reference to Figs. 1 to 7. In each drawing used for the specification, the identical or similar reference numerals designate identical or corresponding elements, and accordingly, those elements will not be further described repeatedly.

The following embodiment is described with respect to the case where a sample container 109 for holding the sample is exemplified as the container, and a container holding unit 114 for holding a plurality of sample containers 109 is exemplified as the container holding unit. It is obvious that the embodiment is not limited to the exemplified case.

For example, an automatic analyzer may be configured to hold one or more sample containers 109 on a rack (corresponding to the container holding unit), and to allow a sample transport unit to transport the sample container to a sample dispensing position. Another automatic analyzer may be configured to have a container exemplified as a reagent container for holding the reagent to be reacted with the sample, and have a reagent holding unit 117 exemplified as the container holding unit.

Firstly, an overall configuration of the automatic analyzer will be described with reference to FIG. 1. FIG. 1 is a drawing illustrating a schematic configuration example of the automatic analyzer.

An automatic analyzer 1 is an apparatus for analyzing a sample using a reagent adapted to a predetermined analysis item, and includes the container holding unit 114, a sample dispensing unit 115, the reagent holding unit 117, a reagent dispensing unit 119, a reaction disk 120, a detection unit 121, a control device 140, an UI unit 110, and the like.

The container holding unit 114 is formed into a disk-like structure having sample container arrangement positions 102 for circularly placing the plurality of sample containers 109 for sample analysis. When dispensing the sample, the container holding unit 114 rotates to transport the sample container 109 to a position (access position) accessed by the sample dispensing unit 115.

As a tag that stores information correlated with information of the stored sample is stuck onto the sample container 109, a reader 106 is provided in the periphery of the container holding unit 114. The container holding unit 114 reads the tag, and transfers tag information to the control device 140.

In this embodiment, a detection unit is provided for detecting, for each of the sample container arrangement positions 102, whether or not the sample container 109 is placed at the sample container arrangement position 102.

The detection unit is composed of, for example, a sample presence/absence sensor 130 for detecting presence/absence of the sample container 109, and a sample position sensor 135 for detecting whether or not a position to be read by the sample presence/absence sensor 130 is at the sample container arrangement position 102. The detailed explanation will be described later.

The sample dispensing unit 115 is composed of a rotary drive mechanism, a vertical drive mechanism, and a dispensing probe, and moves between a sample aspiration position and a sample discharging position.

The reagent holding unit 117 is a mechanism having a cold keeping function for keeping a reagent pack that stores the reagent, and includes a reagent disk and a reagent pack holding unit (both omitted for convenience of illustration).

The reagent pack holding units are circularly arranged on the reagent disk to allow holding of the plurality of reagent packs. The reagent disk includes a rotary drive mechanism to move the respective reagent packs to predetermined positions on the circumference through the rotational motion.

The reagent dispensing unit 119 is composed of a rotary drive mechanism, a vertical drive mechanism, and a dispensing probe. The reagent dispensing unit 119 rotationally moves downward to a position of a reagent pack of predetermined type on the reagent disk, and aspirates a predetermined amount of reagent. After aspiration of the reagent, the reagent dispensing unit 119 moves upward. The reagent dispensing unit 119 then rotationally moves downward to a predetermined reaction cell on the reaction disk 120 as a reagent discharging destination, and discharges the respective reagents.

The temperature of the reaction disk 120 is controlled at a temperature suitable for acceleration of the reaction between the sample and the reagent.

A biochemical analysis flow will be described hereinafter.

Firstly, the sample dispensing unit 115 dispenses a predetermined amount of the sample to a predetermined reaction cell on the reaction disk 120. Thereafter, the reaction disk 120 rotates to move the reaction cell to which the sample has been discharged to a position accessed by the reagent dispensing unit 119 for dispensing a predetermined amount of reagent to the reaction cell to which the sample has been discharged.

Upon completion of the reaction process between the sample and the reagent on the reaction disk 120, the reaction disk 120 rotates to move the reaction cell that contains the reaction liquid after completing the reaction to a placement position of the detection unit 121.

Thereafter, the detection unit 121 measures a reaction signal.

The above-described mechanism of the automatic analyzer 1 is referred to as an analysis operation unit.

The automatic analyzer 1 further includes the control device 140 for controlling operations of the respective devices in the automatic analyzer 1, and the UI unit 110.

For example, the control device 140 is composed of a hardware substrate and a computer, and has built-in components including a storage unit 144 such as the hard disk, a control unit 142, and the like.

The control unit 142 controls operations of the respective mechanisms as described above. The control unit 142 of the embodiment especially controls the reader 106 to read only the sample container arrangement position 102 at which the sample container 109 is placed as detected by the detection unit. In the case where the sample presence/absence sensor 130 detects the signal while the sample position sensor 135 is detecting whether or not its reading position corresponds to the sample container arrangement position 102, the control unit 142 is supposed to determine that the sample container 109 exists at the reading position. Upon detection by the sample position sensor 135 and the sample presence/absence sensor 130, preferably, the control unit 142 keeps the container holding unit 114 in the rotational state so that the reading time is reduced. The detailed explanation will be described later.

The storage unit 144 is constituted by a recording medium that stores control parameters corresponding to the respective units.

The control device 140 may be formed as hardware using a dedicated circuit board, or as software executed by the computer. The control device formed as the hardware may be implemented by integrating a plurality of computing units for executing processing on the wiring substrate, or integrating the computing units either in the semiconductor chip or the package. The control device formed as the software may be implemented by installing a high-speed general-purpose CPU in the computer, and executing the program for desired computing processing. The existing device may be upgraded by the recording medium that records the above-described program. Those devices, circuits, and the computer are connected by either wired or wireless network for appropriate data transmission/reception.

The UI unit 110 is composed of a display device such as a display, and an input device such as a mouse, keyboard, and the like.

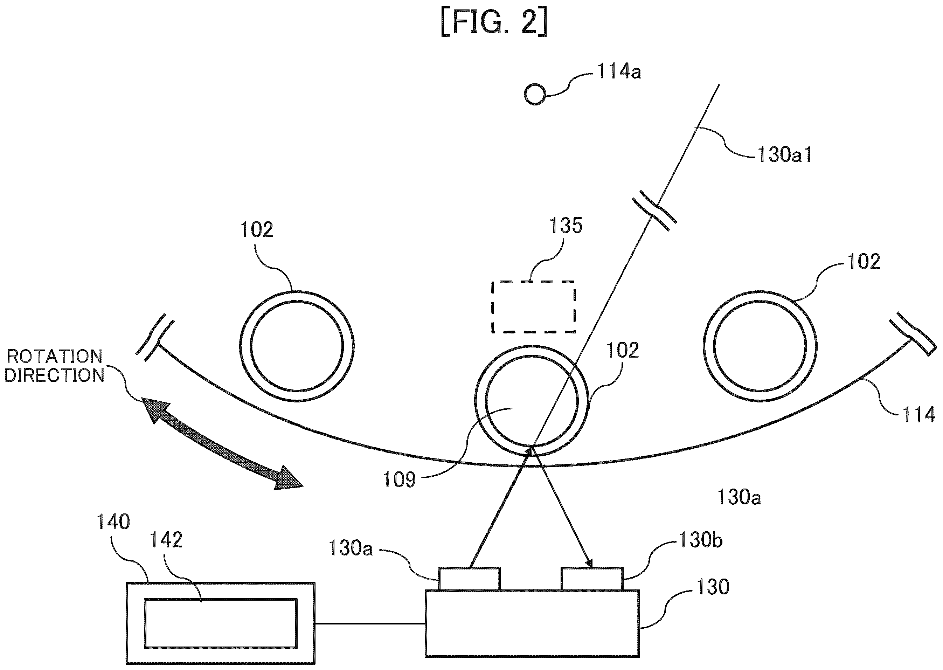

Characteristic configurations of the embodiment will be described with reference to FIG. 2 and subsequent drawings.

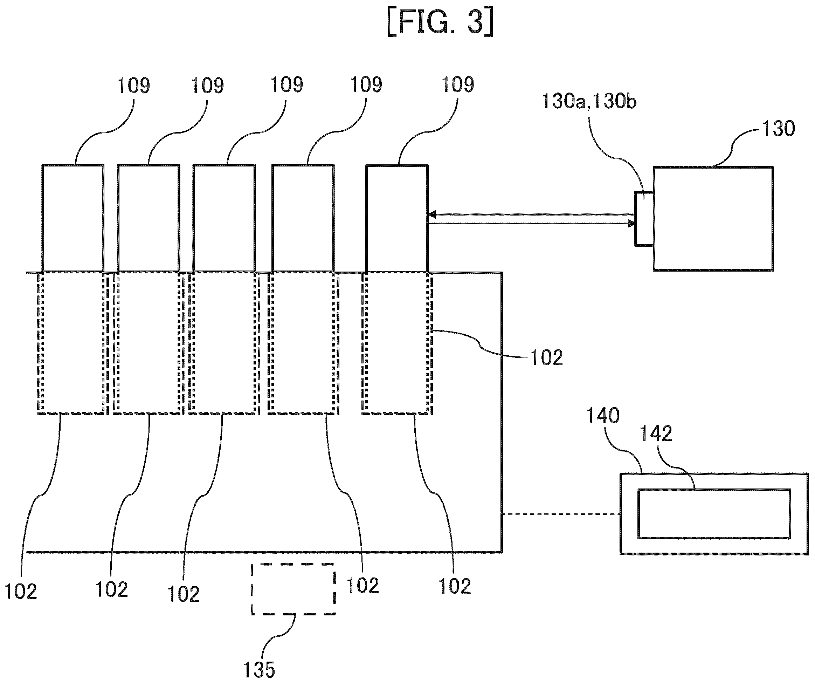

The following describes specific examples of structures and arranged positions of the sample presence/absence sensor and the sample position sensor with reference to FIG. 2 and FIG. 3. FIG. 2 is a top view illustrating the detail of the sample presence/absence sensor and the sample position sensor, and FIG. 3 is a side view illustrating the detail of the sample presence/absence sensor and the sample position sensor.

As illustrated in FIG. 2 and FIG. 3, the sample presence/absence sensor 130 is a reflection type sensor composed of a light emitting unit 130a and a light receiving unit 130b for detecting the light that has been emitted from the light emitting unit 130a, and reflected by the sample container 109.

As illustrated in FIG. 2, the light emitting unit 130a is disposed so that its optical axis 131a1 does not pass on a rotation shaft 114a of the container holding unit 114. As illustrated in FIG. 3, the light emitting unit 130a is disposed to emit the light to the sample container 109 that protrudes from the upper surface of the container holding unit 114.

For example, the sample position sensor 135 may be a rotary encoder that converts a mechanical displacement in a rotational motion of the container holding unit 114 into an electrical signal, and processes this signal to detect the position and the speed. As illustrated in FIG. 3, it is disposed below the container holding unit 114 in the vertical direction.

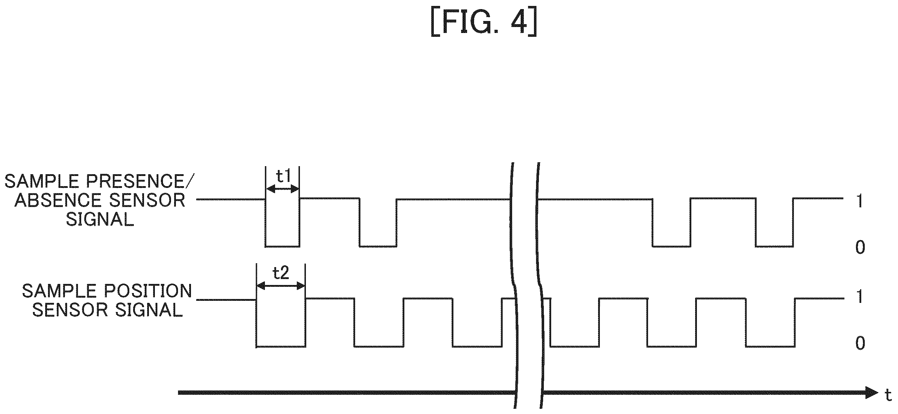

The following describes an example of a relation between a detection signal of the sample presence/absence sensor 130 and a detection signal of the sample position sensor 135 with reference to FIG. 4. FIG. 4 is a drawing illustrating a relation of the sample presence/absence sensor signal and the sample position sensor signal.

As illustrated in FIG. 4, if the detection signal of the sample presence/absence sensor 130 takes "1", the control unit 142 determines that the sample container 109 is not placed. If the detection signal is kept "0" for a time period t1 that is equal to or longer than a predetermined time, the control unit 142 determines that the sample container 109 is placed.

It is assumed that, if the detection signal of the sample position sensor 135 takes "1", the control unit 142 determines that an area of the container holding unit 114 just above the sensor at the timing does not correspond to the sample container arrangement position 102. It is also assumed that, if the detection signal is kept "0" for a time period t2 that is equal to or longer than a predetermined time, it is determined that the area of the container holding unit 114 just above the sensor at the timing corresponds to the sample container arrangement position 102.

In the above-described case, when the detection signal of the sample position sensor 135 is kept "0" for the time period t2 that is equal to or longer than the predetermined time (at the sample container arrangement position 102), and the detection signal of the sample presence/absence sensor 130 is kept "0" for the time period t1 that is equal to or longer than the predetermined time (the sample container 109 exists), the control unit 142 determines that the sample container 109 is placed at the sample container arrangement position 102.

Even if the detection signal of the sample position sensor 135 is kept "0" for the time period t2 that is equal to or longer than the predetermined time, the control unit 142 determines that the sample container 109 is not placed at the sample container arrangement position 102 just above the sample position sensor 135 so long as the detection signal of the sample presence/absence sensor 130 is kept "0" for the time shorter than the time period t1 equal to or longer than the predetermined time, or the detection signal takes "1".

If the detection signal of the sample position sensor 135 is kept "0" for the time shorter than the time period t2 equal to or longer than the predetermined time, or the detection signal takes "1", the control unit 142 determines that the area just above the sample position sensor 135 does not correspond to the sample container arrangement position 102. In accordance with the determination, the flow is allowed to proceed.

For the predetermined period of time from when the container holding unit 114 starts rotating, the control unit 142 may be configured to ignore the detection signal of the sample presence/absence sensor 130 and the detection signal of the sample position sensor 135 on the premise that the signal is not detected during acceleration of the rotating operation. This makes it possible to further improve the detection accuracy. Furthermore, the sample position sensor 135 and the sample presence/absence sensor 130 may be configured not to output the detection signal for the predetermined period of time from when the container holding unit 114 starts rotating, or configured to output the detection signal indicating that the container is not placed, or the position does not correspond to the sample container arrangement position 102.

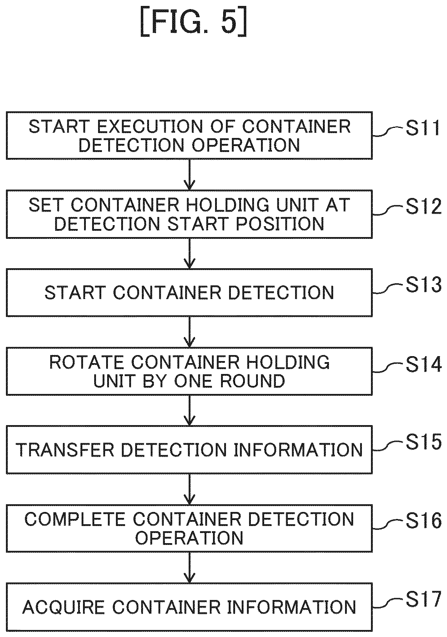

The following describes a characteristic processing flow for reading the sample information according to the present invention with reference to FIG. 5. FIG. 5 illustrates a process flow for reading sample information.

When recognizing an instruction of executing the container detection operation to the sample position sensor 135 based on the determination that the sample container 109 has been placed on the container holding unit 114 (S11), the control unit 142 rotationally moves the container holding unit 114 to a detection start position (S12).

Then the control unit 142 allows the sample presence/absence sensor 130 to start detecting presence/absence of the sample container 109, and the sample position sensor 135 to start detecting the sample container arrangement position 102 (S13).

In the state where the sample presence/absence sensor 130 detects presence/absence of the sample container 109, and the sample position sensor 135 detects the sample container arrangement position 102, the control unit 142 rotates the container holding unit 114 by one round (S14).

Upon termination of the container detection processing, the detection unit constituted by the sample presence/absence sensor 130 and the sample position sensor 135 transfers the information of detection results to the control unit 142 (S15) to complete the container detection operation (S16).

Then the reader 106 executes processing for acquiring the container information indicating placement of the sample container 109 as detected by the sample position sensor 135 (S17).

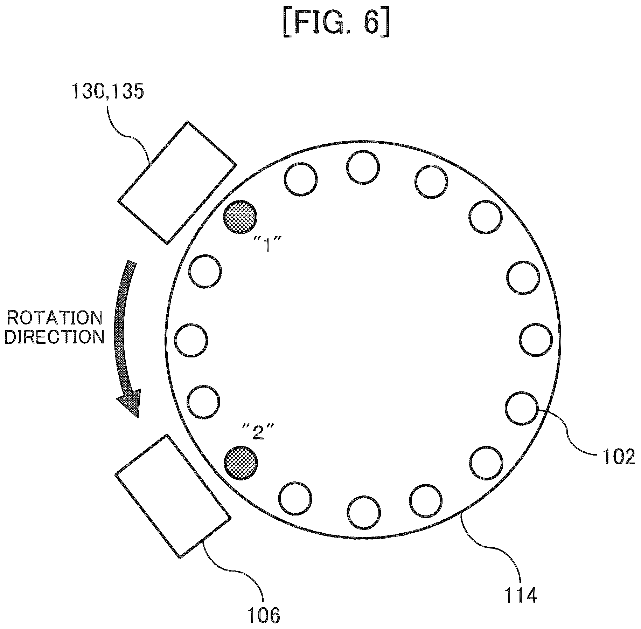

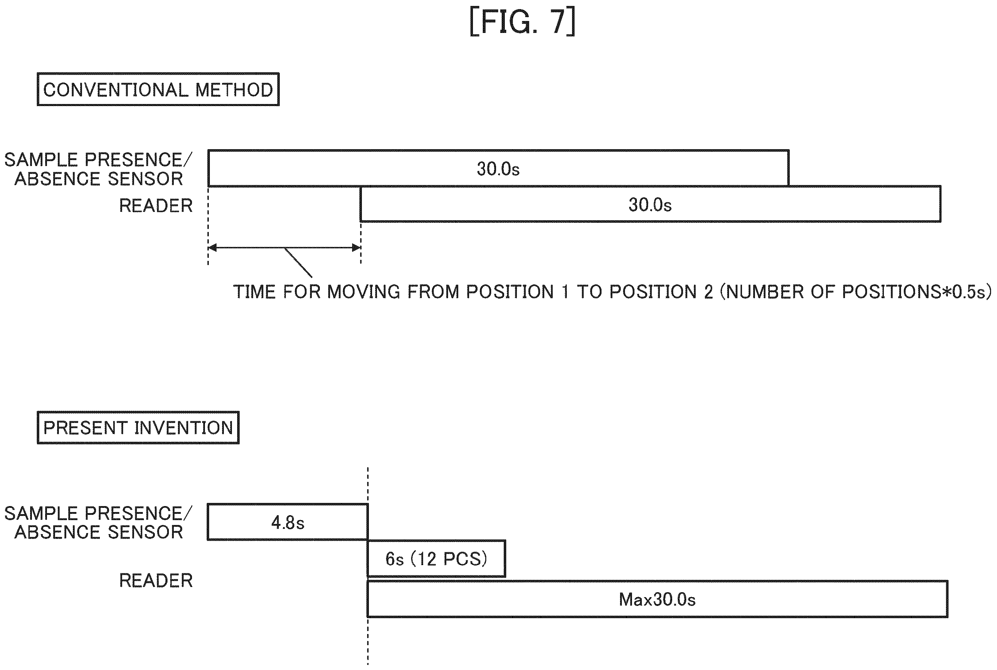

The following describes the difference in the time required to read the sample information between the automatic analyzer 1 of the embodiment and the automatic analyzer as the prior art with reference to FIG. 6 and FIG. 7. FIG. 6 is a drawing illustrating an example of the configuration required for reading sample information in the automatic analyzer, and FIG. 7 is a drawing explaining the difference of the time required for reading sample information of the automatic analyzer of the embodiment and the automatic analyzer of the prior art.

It is assumed herein that, in both cases of the embodiment and the prior art, the number of the sample container arrangement positions 102 on the container holding unit 114 is 60 (in the drawings, "60" positions are not shown for convenience of illustration). In the case of the prior art, it is assumed that the time required for the sample presence/absence sensor 130 to detect the sample container 109, and for the reader 106 to acquire the information of the sample container 109 takes approximately 0.5 seconds per sample. In the case of the present invention, it is assumed that the time required for the sample presence/absence sensor 130 and the sample position sensor 135 to detect the sample container 109 takes approximately 0.08 seconds per position, and the time required for the reader 106 to acquire the information of the sample container 109 takes approximately 0.5 seconds per sample.

Under the above-described conditions, as illustrated in FIG. 7, in the case of the prior art process, each detection is performed at the respective sample container arrangement positions 102 in a stopped state after movement from one sample container arrangement position 102 to another. The time for detection by the sample presence/absence sensor 130 takes 30.0 seconds in total. The time is additionally taken for movement from the position "1" to be firstly detected by the sample presence/absence sensor 130 to the position "2" at which reading is performed by the reader 106. It takes 0.5 seconds as the additional time for each of the sample container arrangement positions 102. The period of time taken for completing the reading processing of the information of the sample container 109 at all the sample container arrangement positions 102 on the container holding unit 114 is obtained by the following formula: the number of the sample container arrangement positions 102 (1 to 60) from the position "1" to "2" × 0.5 seconds + 30.0 seconds. That is, it takes 30.5 seconds as a minimum value and 60.0 seconds as a maximum value, respectively.

In the present invention, in contrast, the need of reading all the sample container arrangement positions 102 by the reader 106 is detected preliminarily to allow the reader 106 to execute the processing for reading the information only at the positions where the sample containers 109 are placed. The time required for the sample presence/absence sensor 130 and the sample position sensor 135 to detect presence/absence of the sample container 109 takes 4.8 seconds. The time required for the reader 106 to read the information of the sample container 109 takes 0.5 seconds (one container) to a minimum, and 30.0 seconds (60 containers) to a maximum. Accordingly, it takes 5.3 seconds to a minimum, and 34.8 seconds to a maximum in total.

Depending on the number of the sample containers 109 placed on the container holding unit 114, basically, all or most of the sample container arrangement positions 102 on the container holding unit 114 are expected to be used. It is supposed to have many cases in which the present invention attains earlier completion of the reading processing.

Advantageous effects of the embodiment will be described.

The automatic analyzer 1 according to the embodiment as described above includes the container holding unit 114 that has the plurality of sample container arrangement positions 102 where the plurality of sample containers 109 used for the sample analysis can be respectively arranged, the detection unit that detects, for each of the sample container arrangement positions 102, whether the sample container 109 is arranged at the sample container arrangement position 102, the reader 106 that reads the information of the sample container 109, and the control unit 142 that controls the reader 106 so as to read only the position 102 at which the sample container 109 is arranged as detected by the detection unit.

The above configuration allows completion of feeding of the container relating to the analysis of the sample or the like in a shorter time than the time taken for the prior art configuration.

The detection unit is configured to have the sample presence/absence sensor 130 for detecting presence/absence of the sample container 109, and the sample position sensor 135 for detecting whether or not the reading position of the sample presence/absence sensor 130 is at the sample container arrangement position 102. The control unit 142 determines that the sample container 109 exists at the reading position when the sample presence/absence sensor 130 detects a signal while the sample position sensor 135 is detecting whether or not the reading position is at the sample container arrangement position 102. The detection unit may be configured to read the sample information at high speeds while minimizing the number of sensors required for the detection unit.

The container holding unit 114 is a disk that includes the plurality of sample container arrangement positions 102 on the circumference of the disk. The sample presence/absence sensor 130 is the reflection type sensor that includes the light emitting unit 130a and the light receiving unit 130b for detecting the light that has been emitted from the light emitting unit 130a, and reflected by the sample container 109. The light emitting unit 130a is arranged so that the optical axis 131a1 of the light emitting unit 130a does not pass on the rotation shaft 114a of the disk. This makes it possible to prevent erroneous detection of an object existing around the rotary center of the container holding unit 114, for example, such structure as the rotation shaft 114a for the sample container 109.

The light emitting unit 130a of the sample presence/absence sensor 130 is arranged so as to emit the light to the sample container 109 that protrudes from the upper surface of the container holding unit 114. This makes it possible to simply form the sample presence/absence sensor 130.

The control unit 142 keeps the container holding unit 114 in the rotational state during detection by the sample presence/absence sensor 130 and detection by the sample position sensor 135. This makes it possible to further reduce the time for reading the container information.

The sample position sensor 135 is arranged below the container holding unit 114 in the vertical direction. This makes it possible to minimize the interference with other configurations.

### <Others>

The present invention may be variously modified and applied without being limited to the above-described embodiment. The above-described embodiments have been described in detail in order to facilitate the understanding of the present invention, and the present invention is not necessarily limited to those including all of the described configurations.

### Reference Signs List

1: automatic analyzer
102: sample container arrangement position
106: reader
109: sample container
110: UI unit
114: container holding unit
114a: rotation shaft
115: sample dispensing unit
117: reagent holding unit
119: reagent dispensing unit
120: reaction disk
121: detection unit
130: sample presence/absence sensor (detection unit, first sensor)
130a: light emitting unit
131a1: optical axis
130b: light receiving unit
135: sample position sensor (detection unit, second sensor)
140: control device
142: control unit
144: storage unit

## Claims

1. An automatic analyzer, comprising:
a container holding unit that has a plurality of positions where each of a plurality of containers used for analysis of a sample can be arranged;
a detection unit that detects, for each of the positions, whether the container is arranged at the position;
a reader that reads information of the container; and
a control unit that controls the reader so as to read only the position at which the container is detected by the detection unit that the container is arranged.

2. The automatic analyzer according to claim 1, wherein
the detection unit is configured of a first sensor and a second sensor, the first sensor detecting presence/absence of the container, the second sensor detecting whether a reading position of the first sensor is the position or not, and
the control unit determines that the container exists at the reading position when the first sensor detects a signal while the second sensor detects whether the reading position is the position or not.

3. The automatic analyzer according to claim 2, wherein
the container holding unit is a disk that includes a plurality of the positions on a circumference of the disk,
the first sensor is a reflection type sensor that includes a light emitting element and a light receiving element, the light receiving element detecting light that is emitted from the light emitting element and reflected by the container, and
the light emitting element is arranged so that the optical axis of the light emitting element does not pass on a rotation shaft of the disk.

4. The automatic analyzer according to claim 3, wherein
the light emitting element of the first sensor is arranged so as to emit the light to the container that protrudes from an upper surface of the container holding unit.

5. The automatic analyzer according to claim 3, wherein
the control unit keeps the container holding unit to rotate during detection by the first sensor and detection by the second sensor.

6. The automatic analyzer according to claim 2, wherein
the second sensor is arranged below the container holding unit in the vertical direction.
